# EUROPÄISCHE PATENTANMELDUNG

(11) **EP 3 460 652 A1**
(43) Veröffentlichungstag der Anmeldung: **27.03.2019**
(21) Anmeldenummer: 17193194.2
(22) Anmeldetag: 26.09.2017
(51) Int. Cl.: G06F 8/61, G06F 8/65

(54) **VERFAHREN ZUM INSTALLIEREN UND AKTUALISIEREN VON FUNKTIONSMODULEN**

(71) Anmelder: Siemens Aktiengesellschaft, 80333 München (DE)
(72) Erfinder: Gawron-Deutsch, Tobias, 1040 Wien (AT); Diwold, Konrad, 1180 Wien (AT); Einfalt, Alfred, 1210 Wien (AT); Krammer, Lukas, 1220 Wien (AT)
(74) Vertreter: Maier, Daniel Oliver

(57) **Zusammenfassung**

Die Erfindung betrifft ein Verfahren zum Installieren und Aktualisieren von Funktionsmodulen, wobei die Funktionsmodule auf Feldgeräten eines verteilten Automatisierungssystems wie z.B. einem Energieversorgungssystem eingesetzt werden. Zu jedem Feldgerät werden auf einer zentralen Verwaltungseinheit die jeweils eingesetzten Funktionsmodule mit den zugehörigen Verwaltungsdaten hinterlegt, wobei zwischen der zentralen Verwaltungseinheit und den Feldgeräten des verteilten Automatisierungssystems keine benutzbare Datenverbindung besteht. Für eine Aktualisierung werden von der zentralen Verwaltungseinheit die zu aktualisierenden Feldgeräte festgelegt (101). Nach Aufbau einer Datenverbindung wird automatisch eine Liste der zu aktualisierenden Feldgeräte erstellt und gemeinsam mit den jeweils zu installierenden Funktionsmodulen und den zugehörigen Verwaltungsdaten auf eine Transfereinheit übertragen (102). Die Transfereinheit wird zum jeweiligen zu aktualisierenden Feldgerät transferiert und eine Datenverbindung aufgebaut (103). Nach einer Authentifizierung (104) werden die jeweils zu installierenden Funktionsmodule von der Transfereinheit auf das jeweilige zu aktualisierende Feldgerät übertragen und dort installiert (105). Nach erfolgter Installation wird von der Transfereinheit ein aktueller Status des jeweiligen Feldgeräts abgefragt und gespeichert (106). Nach einem Rücktransfer der Transfereinheit zur zentralen Verwaltungseinheit und dem Aufbau einer Datenverbindung (107) werden die Verwaltungsdaten auf der zentralen Verwaltungseinheit automatisch anhand des auf der Transfereinheit gespeicherten aktuellen Status des jeweiligen Feldgeräts angepasst (108).

## Beschreibung

### Technisches Gebiet

Die vorliegende Erfindung betrifft ein Verfahren zum Installieren und Aktualisieren von Funktionsmodulen, wobei die Funktionsmodule auf Feldgeräten eines verteilten Automatisierungssystems wie z.B. einem Energieversorgungssystem eingesetzt werden. Zu jedem Feldgerät werden auf einer zentralen Verwaltungseinheit die jeweils eingesetzten Funktionsmodule mit zugehörigen Verwaltungsdaten hinterlegt, wobei zwischen der zentralen Verwaltungseinheit und den Feldgeräten des verteilten Automatisierungssystems keine verwendbare Datenverbindung besteht.

### Stand der Technik

Im industriellen Umfeld werden zur Steigerung der Effektivität und Effizienz mittlerweise so genannte Industrial Internet-of-Things-Konzepte bzw. IIoT-Konzepte eingesetzt. Ein wichtiger Aspekt von IIoT ist eine Verbesserung der Effektivität durch intelligente industrielle Systeme und flexiblere Produktionstechniken. Mit IIoT können eine Nutzung von Daten, welche von Feldgeräten (z.B. Sensoreinheiten, Messeinheiten, Steuer- und Regeleinheiten, etc.) geliefert werden, eine Maschinen-zu-Maschinen-Kommunikation (M2M-Kommunikation) sowie die Effizienz von intelligenten Einheiten und Automaten eines Automatisierungssystems gesteigert werden.

Eine wichtige Komponente bei IIoT-Konzepten ist die Möglichkeit Funktionsmodule - d.h. Anwendungen bzw. Applikationen - dynamisch während des Betriebs auf Einheiten des Automatisierungssystems - vor allem auf Feldgeräten wie z.B. Sensoreinheiten, Messeinheiten, Steuereinheiten, Regeleinheiten, etc. zu installieren. Im industriellen Umfeld sieht ein typischer Ablauf beispielsweise vor, dass nach einem Kauf von Lizenzen für die jeweiligen Funktionsmodule bei einem Hersteller die entsprechenden Funktionsmodule sowie die zugehörigen Lizenzen z.B. an eine zentrale Verwaltungseinheit des jeweiligen intelligenten Automatisierungssystems übermittelt werden. Mit Hilfe der zentralen Verwaltungseinheit kann z.B. festgelegt werden, auf welchem Feldgerät welches Funktionsmodul in welcher Version zu installieren ist. In einem nächsten Schritt werden die Funktionsmodule beispielsweise über eine aktive Datenverbindung zwischen zentraler Verwaltungseinheit und Feldgerät auf das jeweilige Feldgerät geladen, die entsprechenden Lizenzen als verwendet markiert bzw. die zugehörigen Verwaltungsdaten des jeweiligen Feldgeräts in der zentralen Verwaltungseinheit entsprechend angepasst und das Funktionsmodul letztendlich auf dem jeweiligen Feldgerät installiert und in Betrieb genommen. Dabei kann beispielsweise ein Abgleich zwischen installierten Funktionsmodulen, verwendeten Lizenzen bzw. in der zentralen Verwaltungseinheit hinterlegten Verwaltungsdaten je Feldgerät automatisch und regelmäßig durchgeführt und damit die Verwaltungsdaten konsistent gehalten werden. Dazu ist eine bestehende, aktive und nutzbare Datenverbindung zwischen der zentralen Verwaltungseinheit und den Feldgeräten des Automatisierungssystems notwendig.

Ist einen derartige Datenverbindung allerdings nicht möglich, so kann der Abgleich zwischen zentraler Verwaltungseinheiten und Feldgerät nicht oder nur mangelhaft erfolgen und ein Verteilen/Installieren der Funktionsmodule sowie eine Konsistenzhaltung der Verwaltungsdaten der Feldgeräte in der zentralen Verwaltungseinheit sind nur schwer möglich und vor allem fehleranfällig. Ursachen für eine fehlende und/oder nicht nutzbare Datenverbindung zwischen der zentralen Verwaltungseinheit und den jeweiligen Feldgeräten des Automatisierungssystems können vielfältig sein. Es kann beispielsweise sein, dass es zwischen der zentralen Verwaltungseinheit und einem Feldgerät überhaupt keine Datenverbindung gibt. Es ist auch möglich, dass eine bestehende Datenverbindung z.B. aus Sicherheitsgründen und/oder wegen zu geringer Bandbreite nicht für eine Übertragung von Funktionsmodulen und den entsprechenden Verwaltungsdaten nicht genutzt werden kann oder darf. Gegebenfalls können die bestehenden Datenverbindungen des Automatisierungssystems die für eine Übertragung von Funktionsmodulen und/oder Verwaltungsdaten notwendigen Protokolle nicht aufweisen oder die zentrale Verwaltungseinheit ist z.B. nicht direkt in das Automatisierungssystem eingebunden (z.B. wegen Inkompatibilitäten, unterschiedlicher Hersteller, etc.).

Insbesondere in stark verteilten Automatisierungssystemen wie z.B. Energieversorgungssystemen (z.B. Mittelspannungs- oder Niederspannungsnetzen) kann es vorkommen, dass Datenverbindungen von und zu einer zentralen Verwaltungseinheit teilweise oder gänzlich fehlen oder nicht für die Installation von Funktionsmodulen auf den Feldgeräten nutzbar und/oder geeignet sind. Eine Herstellung von entsprechenden Datenverbindungen ist bei stark verteilten Automatisierungssystemen wie z.B. Energieversorgungssystemen oft nur sehr schwer möglich oder mit unverhältnismäßig hohen Kosten verbunden und die einzelnen Feldgeräte sind nicht selten räumlich weit verteilt.

Da ein Einsatz von Funktionsmodulen bzw. Applikationen auf Feldgeräten eines verteilten Automatisierungssystems derzeit noch ein relativ neuer Ansatz ist, werden heutzutage Feldgeräte - vor allem bei stark verteilten Automatisierungssystemen - üblicherweise mit einem fixen Satz an Funktionen bzw. Funktionsmodulen ausgeliefert und installiert. Eine Aktualisierung der Feldgeräte z.B. für Erweiterungen, Installation neuer Funktionen, etc. erfolgt beispielsweise durch ein Update der gesamten so genannten Firmware eines Feldgeräts.

Eine Variante dazu ist beispielsweise der Ansatz, dass bei der Auslieferung und Installation eines Feldgeräts zwar alle Funktionsmodule mitgeliefert, aber z.B. nur teilweise oder nicht freigeschaltet werden. Um dann bestimmte Funktionsmodule auf dem Feldgerät zu aktivieren, können dann z.B. Freischaltcodes erworben bzw. genutzt werden. Diese Vorgehensweise weist allerdings den Nachteil auf, dass die jeweiligen Feldgeräte mit einer relativ starren Konfiguration ausgeliefert und installiert werden. Eine nachträgliche Erweiterung mit neuen oder verbesserten Funktionsmodule ist in diesem Fall nur mit sehr großem Aufwand bzw. kaum bis überhaupt nicht möglich.

Weiterhin kann z.B. eine sogenannte Engineering-Einheit zum Installieren neuer Funktionsmodule bzw. zum Aktualisieren von Funktionsmodulen auf Feldgeräten eingesetzt werden. Dazu wird beispielsweise von einer geschulten Fachkraft die Engineering-Einheit mit dem zu aktualisierenden Feldgerät verbunden. Auf der Engineering-Einheit kann eine Verwaltungsfunktion z.B. für zu installierende Funktionsmodule und entsprechende Verwaltungsdaten je Feldgerät verfügbar sein. Mittels entsprechender Bedienung der Engineering-Einheit wird dann z.B. festgelegt, welches Funktionsmodul auf das Feldgerät übertragen und dort installiert bzw. aktualisiert werden muss. Ein Abgleich der Verwaltungsdaten in der zentralen Verwaltungseinheit kann beispielsweise halbautomatisch mittels Anstoß durch den Benutzer über die Engineering-Einheit oder manuell erfolgen. Durch einen halbautomatischen oder ein manuellen Abgleich kann es nicht selten zu Inkonsistenzen bei den Verwaltungsdaten in der zentralen Verwaltungseinheit und einer Vielzahl an weiteren potentiellen Fehlern kommen - d.h. es kann z.B. nicht mehr genau festgestellt werden, welches Funktionsmodul in welcher Version auf welchem Feldgerät installiert ist und/oder welche zugehörige Lizenz dafür genutzt wird.

Alternativ zur Verwendung einer Verwaltungsfunktion kann die Engineering-Einheit nach Anbindung an das zu aktualisierende Feldgerät z.B. eine Verbindung mit einem Betriebssystem des Feldgeräts aufbauen, um das zu installierende Funktionsmodul zu übertragen und zu installieren. In diesem Fall müssen dann die entsprechenden Verwaltungsdaten (z.B. genutzte Lizenz, Version des Funktionsmoduls, etc.) für das jeweilige Feldgerät in der zentralen Verwaltungseinheit manuell abgeglichen werden. Dies kann neben einem relativ großen Aufwand zu einer Vielzahl an potentiellen Fehlern und Inkonsistenzen bei den Verwaltungsdaten führen.

### Darstellung der Erfindung

Der Erfindung liegt daher die Aufgabe zugrunde, ein Verfahren zur Installation und Aktualisierung von auf Feldgeräten eingesetzten Funktionsmodulen anzugeben, durch welches bei einer fehlenden, nutzbarer Datenverbindung zwischen einer zentralen Verwaltungseinheit und den jeweiligen Feldgeräten auf einfache Weise und ohne großen Aufwand einen konsistente Verwaltung, Installation und Aktualisierung von Funktionsmodulen auf den Feldgeräten durchgeführt werden kann.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs erwähnten Art, bei welchem von einer zentralen Verwaltungseinheit die zu aktualisierenden Feldgeräte festgelegt werden. Nach Aufbau einer Datenverbindung zwischen der zentralen Verwaltungseinheit und einer Transfereinheit wird eine Liste der zu aktualisierenden Feldgeräte automatisch erstellt und die Liste gemeinsam mit den jeweils zu installierenden Funktionsmodulen sowie entsprechenden Verwaltungsdaten auf die Transfereinheit übertragen. Dann wird die Transfereinheit zu den jeweils zu aktualisierenden Feldgeräten transferiert. Beim jeweiligen zu aktualisierenden Feldgerät wird von der Transfereinheit eine Datenverbindung zum Feldgerät aufgebaut und eine Authentifizierung durchgeführt. Nach erfolgreicher Authentifizierung der Transfereinheit werden die jeweiligen Funktionsmodule auf das jeweils zu aktualisierende Feldgerät übertragen und dort installiert. Nach erfolgter Installation wird ein aktueller Status des jeweiligen Feldgeräts bzw. der auf dem jeweiligen Feldgerät eingesetzten Funktionsmodule abgefragt und auf der Transfereinheit gespeichert. Nach einem Rücktransfer der Transfereinheit zur zentralen Verwaltungseinheit und dem Aufbau einer Datenverbindung werden die Verwaltungsdaten zu den auf den jeweiligen Feldgeräten eingesetzten Funktionsmodulen anhand des jeweils aktuellen Status des jeweiligen Feldgeräts automatisch angepasst.

Der Hauptaspekt der gegenständlichen Erfindung besteht darin, dass beim erfindungsgemäßen Verfahren eine Transfereinheit eingesetzt wird, welche sich gegenüber der zentralen Verwaltungseinheit automatisch wie ein zu aktualisierendes Feldgerät verhält und sich gegenüber dem zu aktualisierenden Feldgerät wie die zentrale Verwaltungseinheit verhält. Dadurch können die Installation der Funktionsmodule, der Abgleich der Verwaltungsdaten wie z.B. genutzte Lizenzen, Versionsdaten des jeweils installierten Funktionsmoduls, aktueller Status des jeweiligen Feldgeräts, etc., Authentifizierung, Autorisierung, etc. automatisch und ohne fehleranfällige, manuelle Interaktion durchgeführt werden. Durch das erfindungsgemäße Verfahren und den Einsatz der Transfereinheit können eine Installation von Funktionsmodulen und eine Aktualisierung von Feldgeräten in einem verteilten Automatisierungssystem sehr einfach und mit relativ geringen Aufwand und Kosten durchgeführt werden.

Weiterhin wird durch eine Abfrage des aktuellen Status des jeweiligen Feldgeräts nach erfolgter Installation durch die Transfereinheit sichergestellt, dass fehlgeschlagene Aktualisierungen bzw. Installationen von Funktionsmodulen erkannt werden und Informationen zur Behebung eines eventuellen Installationsproblems z.B. an einen Hersteller des Funktionsmoduls weitergeleitet werden können. Damit kann beispielsweise eine Neuausrollung des betroffenen Funktionsmoduls nach einer Bereitstellung einer neuen, gegebenenfalls korrigierten Version dieses Funktionsmoduls durchgeführt werden.

Es ist vorteilhaft, wenn zusätzlich zur Authentifizierung der Transfereinheit das jeweilige zu aktualisierende Feldgerät von der Transfereinheit mittels Nahfeldkommunikation identifiziert wird. Damit wird auf einfache Weise sichergestellt, dass die jeweiligen Funktionsmodule auf das richtige Feldgerät übertragen bzw. das richtige Feldgerät des verteilten Automatisierungssystems aktualisiert wird. Die Identifizierung mittels Nahfeldkommunikation kann weiterhin Teil der wechselseitigen Authentifizierung zwischen dem jeweiligen zu aktualisierenden Feldgerät und der Transfereinheit sein und damit die Sicherheit erhöhen.

Idealerweise werden von der Liste, welche von der zentralen Verwaltungseinheit erstellt und welche auf die Transfereinheit übertragen wird, alle aktuell zu aktualisierenden Feldgeräte sowie die jeweils zu installierenden Funktionsmodule und die jeweils zugehörigen Verwaltungsdaten - d.h. Lizenzdaten, Versionsdaten, Zugangsdaten zum jeweiligen Feldgerät, etc. umfasst. Damit können unabhängig von einer Position des Feldgeräts im verteilten Automatisierungssystem bzw. unabhängig von einer Route eines Servicetechnikers alle zu aktualisierenden Feldgeräte mit den zu installierenden Funktionsmodulen aufgerüstet werden.

Alternativ kann es allerdings günstig sein, wenn von der Liste, welche von der zentralen Verwaltungseinheit erstellt und welche auf die Transfereinheit übertragen wird, nur eine ausgewählte Untermenge der aktuell zu aktualisierenden Feldgeräte sowie die jeweils zu installierenden Funktionsmodule und die jeweils zugehörigen Verwaltungsdaten umfasst wird. Dadurch werden beispielsweise bei Verlust der Transfereinheit nicht alle Lizenz- und Zugangsdaten ungültig oder müssen geändert werden. Weiterhin können vor allem bei räumlich sehr verteilten Automatisierungssystemen wie z.B. bei Energieversorgungssystemen räumlich beisammen liegende, zu aktualisierenden Feldgeräte zusammengefasst und damit die Aktualisierung effizienter gestaltet werden.

Ein zweckmäßige Weiterbildung des erfindungsgemäßen Verfahrens sieht vor, dass eine abgeschlossene Übertragung der Liste der zu aktualisierenden Feldgeräte sowie der jeweils zugehörigen Funktionsmodule und der jeweils zugehörigen Verwaltungsdaten und/oder eine abgeschlossene Anpassung der Verwaltungsdaten in der zentralen Verwaltungseinheit von der Transfereinheit durch einen Nachricht angezeigt wird. Dadurch wird von der Transfereinheit klar angezeigt, dass eine jeweilige Transaktion - d.h. Übertragen der für eine Aktualisierung notwendigen Funktionsmodule und Daten wie z.B. Liste der zu aktualisierenden Feldgeräte, Zugangsdaten, Lizenzdaten, etc. oder ein Abgleich der Verwaltungsdaten nach erfolgter Aktualisierung der jeweiligen Feldgeräte abgeschlossen ist. Für eine Anzeige der Nachricht kann beispielsweise eine Anzeigeeinheit wie z.B. eine Status-LED eingesetzt werden, welche als Nachricht z.B. dauerhaft aufleuchten, blinken oder eine Farbe wechseln kann. Durch die Nachricht kann dem Benutzer weiterhin mitgeteilt werden, dass die Datenverbindung zwischen zentraler Verwaltungseinheit und der Transfereinheit beendet werden kann.

Es ist weiterhin zweckmäßig, wenn ebenfalls eine abgeschlossene Übertragung wie eine abgeschlossene Installation der jeweiligen Funktionsmodule auf dem jeweiligen Feldgerät sowie die abgeschlossenen Abfrage des aktuellen Status des jeweiligen Feldgeräts von der Transfereinheit durch eine einfache Nachricht angezeigt werden. Dazu kann ebenfalls eine Anzeigeeinheit wie z.B. eine Status-LED verwendet werden, welche z.B. ihre Farbe ändert, dauerhaft leuchtet oder zu blinken beginnt, wenn die entsprechende Transaktion zwischen Transfereinheit und Feldgerät abgeschlossen ist. Damit kann beispielsweise dem Nutzer mitgeteilt werden, dass die Datenverbindung zwischen dem jeweiligen Feldgerät oder jenem Teil des Automatisierungssystems, in welchem das Feldgerät angebracht ist, und der Transfereinheit beendet werden kann.

Eine Ausgestaltung der Erfindung sieht vor, dass die Datenverbindung zwischen zentraler Verwaltungseinheit und der Transfereinheit als drahtgebundene oder als drahtlose Verbindung aufgebaut wird. Für eine drahtgebundene Verbindung kann die Transfereinheit beispielsweise mittels eines Ethernet-Kabels mit jenem Netzwerk verbunden werden, in welchem die zentrale Verwaltungseinheit angebracht ist, oder mit der zentralen Verwaltungseinheit z.B. direkt verbunden werden. Alternativ kann die Datenverbindung zwischen der zentralen Verwaltungseinheit und der Transfereinheit auch über eine drahtlose Verbindung wie z.B. Wireless LAN, Bluetooth, etc. automatisch z.B. beim Einschalten der Transfereinheit aufgebaut werden.

Analog wird die Datenverbindung zwischen der Transfereinheit und dem jeweiligen zu aktualisierenden Feldgerät bzw. oder jenem Teil des Automatisierungssystems, in welchem das Feldgerät angebracht ist, als drahtgebundene oder als drahtlose Verbindung aufgebaut. Für eine drahtgebundene Verbindung kann die Transfereinheit beispielsweise mittels Ethernet-Kabel mit dem Teil des Automatisierungssystems des jeweils zu aktualisierenden Feldgeräts verbunden werden. Bei einer drahtlosen Verbindung kann z.B. über Wireless LAN, Bluetooth, Zigbee, etc. die Datenverbindung automatisch vor Ort z.B. mit Einschalten der Transfereinheit aufgebaut werden. Zusätzlich zur drahtlosen Datenverbindung kann beispielsweise für einen Identifizierung des jeweiligen zu aktualisierenden Feldgeräts noch Nahfeldkommunikation genutzt werden.

Idealerweise umfassen die Verwaltungsdaten, welche zu den jeweiligen, auf den Feldgeräten eingesetzten Funktionsmodulen in der zentralen Verwaltungseinheit hinterlegt sind, zumindest Lizenzdaten bzw. -information zu den Funktionsmodulen wie z.B. Gültigkeit, Nutzungsstatus der Lizenz, etc., Versionsdaten (z.B. welche Version wird auf welchem Feldgerät eingesetzt) und Zugangsdaten zu den jeweiligen Feldgeräten, auf welchen die jeweiligen Funktionsmodule installiert sind. Damit können auf Basis der Verwaltungsdaten sehr einfach Listen für die Aktualisierung von Feldgeräten erstellt werden bzw. mit Hilfe der Transfereinheit sehr einfach die entsprechende Aktualisierung durchgeführt werden.

Für die Authentifizierung zwischen dem jeweiligen zu aktualisierenden Feldgerät und der Transfereinheit empfiehlt es sich, dass sich die Transfereinheit aus Sicherheitsgründen mittels Passwort identifiziert. Alternativ kann auch ein einmalig benutzbarer Schlüssel - ein so genannter Single-Use-Key - oder vorvereinbarte Schlüssel - so genannte Pre-shared Keys - genutzt werden. Pre-shared Keys bezeichnen dabei z.B. Verschlüsselungsverfahren, bei denen die Schlüssel vor der Kommunikation beiden Teilnehmern bekannt sein müssen.

### Kurzbeschreibung der Zeichnung

Die Erfindung wird nachfolgend in beispielhafter Weise anhand der beigefügten Figur erläutert. Dabei zeigt die Figur schematisch und beispielhaft einen Ablauf des erfindungsgemäßen Verfahrens zum Installieren und Aktualisieren von Funktionsmodulen auf Feldgeräten in einem verteilten Automatisierungssystem.

### Ausführung der Erfindung

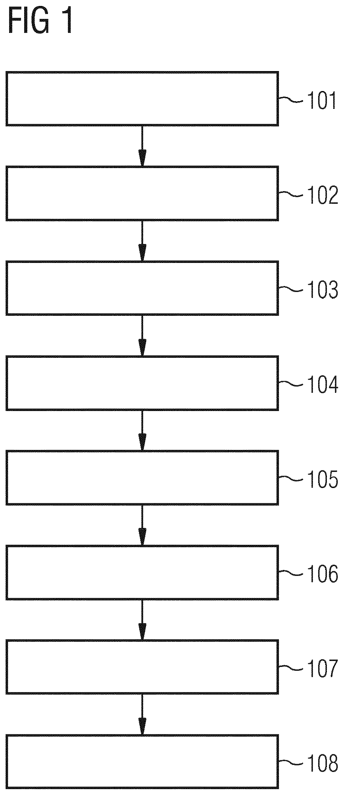

Figur 1 zeigt beispielhaft und schematisch einen Ablauf des Verfahrens zum Installieren und Aktualisieren von Funktionsmodulen, welche auf Feldgeräten wie z.B. Sensoren, Messeinheiten, Steuereinheiten, Regeleinheiten, etc. eines verteilten Automatisierungssystem wie z.B. einem Energieversorgungssystems (z.B. Mittelspannungsnetz, Niederspannungsnetz, intelligentes Energieversorgungsnetz im Unternehmensbereich, etc.) eingesetzt werden bzw. ablaufen. Die Feldgeräte, die auf ihnen eingesetzten Funktionsmodule sowie entsprechend zugehörige Verwaltungsdaten werden auf einer zentralen Verwaltungseinheit verwaltet. Die Verwaltungsdaten, welche je Feldgerät und für die jeweiligen eingesetzten Funktionsmodule in der zentralen Verwaltungseinheit hinterlegt sind, können beispielsweise Lizenzdaten für das jeweilige Funktionsmodul (Status der Lizenz wie z.B. verfügbar, genutzt, aktiv, abgelaufen, etc.), Versionsdaten (z.B. aktuelle Version des Funktionsmoduls, eingesetzte Version, zur Installation verfügbare Version, etc.) und Zugangsdaten für eine Installation am jeweiligen Feldgerät umfassen.

In einem ersten Verfahrensschritt 101 werden von der zentralen Verwaltungseinheit die zu aktualisierenden Feldgeräte eruiert und festgelegt. D.h. es wird bestimmt, welches Funktionsmodul in welcher Version und mit welcher Lizenz auf welchem Feldgerät des verteilten Automatisierungssystems installiert werden soll. Dann wird in einem zweiten Verfahrensschritt 102 eine Datenverbindung zwischen der zentralen Verwaltungseinheit und einer Transfereinheit aufgebaut, wobei die Transfereinheit beispielsweise als mobiler, batteriebetriebener Kleincomputer ausgeführt sein kann. Für den Datenverbindungsaufbau wird z.B. die Transfereinheit an das Netzwerk der zentralen Verwaltungseinheit z.B. mittels Ethernet-Kabel angeschlossen oder die Transfereinheit verbindet sich beim Einschalten automatisch drahtlos - beispielsweise mittels Wireless LAN oder Bluetooth - mit der zentralen Verwaltungseinheit.

Nach erfolgtem Datenverbindungsaufbau wird im zweiten Verfahrensschritt 102 eine Liste der zu aktualisierenden Feldgeräte erstellt und ermittelt, welche Funktionsmodule, Lizenzdaten bzw. Lizenzen und Zugangsdaten zu den Feldgeräten für die Aktualisierung benötigt werden. Die Liste der zu aktualisierenden Feldgeräte wird dann gemeinsam mit den Funktionsmodulen und den entsprechenden Verwaltungsdaten - d.h. Lizenz- und Zugangsdaten - an die Transfereinheit übertragen und dort abgelegt. Dabei kann beispielsweise die Liste alle aktuell zu aktualisierenden Feldgeräte umfassen und es können alle Funktionsmodule mit den entsprechenden Verwaltungsdaten auf die Transfereinheit übertragen werden, welche auf den jeweiligen zu aktualisierenden Feldgeräten zu installieren sind. Alternativ kann auf der Transfereinheit eine Liste übertragen werden, welche nur eine ausgewählte Untermenge der aktuell zu aktualisierenden Feldgeräte umfasst. In diesem Fall werden dann auf der Transfereinheit nur jene Funktionsmodule und Verwaltungsdaten hinterlegt, welche für die Aktualisierung der ausgewählten Feldgeräte benötigt werden. Eine Auswahl der Untermenge der aktuell zu aktualisierenden Feldgeräte kann beispielsweise nach geografischen Kriterien, etc. getroffen werden.

Eine abgeschlossene Übertragung der Liste der zu aktualisierenden Feldgeräte sowie der entsprechenden Funktionsmodule und Verwaltungsdaten an die Transfereinheit wird mittels einer einfachen Nachricht wie z.B. mit Hilfe einer Status-LED angezeigt. Die Datenverbindung zwischen der zentralen Verwaltungseinheit und der Transfereinheit kann dann beendet werden - d.h. bei einer drahtgebundenen Datenverbindung wird die Transfereinheit z.B. vom Netzwerk der zentralen Verwaltungseinheit abgehängt und abgeschaltet. Bei einer drahtlosen Datenverbindung reicht beispielsweise das Abschalten der Transfereinheit, um die Datenverbindung zur zentralen Verwaltungseinheit zu beenden.

In einem dritten Verfahrensschritt 103 wird dann die Transfereinheit zu den jeweiligen zu aktualisierenden Feldgeräten transportiert. Vor Ort beim jeweiligen zu aktualisierenden Feldgerät wird dann eine Datenverbindung zum jeweiligen Feldgerät aufgebaut. Dazu kann die Transfereinheit z.B. mittels Ethernet-Kabel an das Netzwerk des jeweils zu aktualisierenden Feldgeräts angebunden werden oder die Transfereinheit verbindet sich drahtlos beim Einschalten mit dem jeweiligen zu aktualisierenden Feldgerät bzw. dem Netzwerk dieses Feldgeräts. Für eine drahtlose Datenverbindung können beispielsweise je nach Verfügbarkeit Wireless LAN, Bluetooth, Zigbee oder andere verfügbare drahtlose Netzwerke genutzt werden.

Idealerweise wird zusätzlich zur drahtlosen Datenverbindung über z.B. Wireless LAN, Bluetooth, Zigbee, etc. auch Nahfeldkommunikation zum Austausch von Daten zwischen der Transfereinheit und dem jeweiligen zu aktualisierenden Feldgerät - insbesondere bei der Authentifizierung eingesetzt. Die Authentifizierung wird in einem vierten Verfahrensschritt 104 durchgeführt. Dabei kann bei geringeren Sicherheitsanforderungen die Transfereinheit mit Hilfe eines Passworts, von vorvereinbarten Schlüsseln - so genannten Pre-shared Keys - oder eines einmalig nutzbaren Schlüssels - eines so genannten Single-use Key - identifiziert werden. Bei höheren Sicherheitsanforderungen kann zusätzlich zur Authentifizierung der Transfereinheit mittels Passwort, vorvereinbarten Schlüssel oder einmalig nutzbarem Schlüssel das jeweils zu aktualisierende Feldgerät mittels Nahfeldkommunikation identifiziert werden. Damit wird insbesondere bei Nutzung einer drahtlosen Datenverbindung auf einfache Weise sichergestellt, dass das richtige Feldgerät aktualisiert wird.

Nach erfolgreicher Authentifizierung der Transfereinheit werden in einem fünften Verfahrensschritt 105 die jeweiligen Funktionsmodule auf das jeweilige zu aktualisierende Feldgerät übertragen und dort installiert. Nach erfolgter Installation wird dann in einem sechsten Verfahrensschritt 106 von der Transfereinheit ein aktueller Status des jeweiligen Feldgeräts abgefragt. Bei der Abfrage des aktuellen Status können beispielsweise die auf dem jeweiligen Feldgerät installierten Funktionsmodule, ein Erfolgsstatus der Installation und weitere, entsprechende Parameter abgefragt werden. Der abgefragte, aktuelle Status des jeweiligen Feldgeräts wird auf der Transfereinheit gespeichert.

Durch die Abfrage im sechsten Verfahrensschritt 106 wird sichergestellt, dass fehlgeschlagene Aktualisierungen bzw. Installationen von Funktionsmodulen erkannt werden. Durch die Transfereinheit können Informationen über ein Installationsproblem z.B. an die zentrale Verwaltungseinheit und gegebenenfalls an den Hersteller des betroffenen Funktionsmoduls weitergeleitet werden. Der Abschluss der Installation der Funktionsmodule auf dem jeweiligen Feldgerät sowie der Abfrage des aktuellen Status wird von der Transfereinheit wieder mittels einer einfachen Nachricht z.B. über eine Status-LED angezeigt. Die Datenverbindung zwischen der Transfereinheit und dem jeweiligen Feldgerät bzw. dem Netzwerk, in welchem das Feldgerät angebracht ist, kann dann beendet werden und die Transfereinheit abgeschaltet.

Nach der Aktualisierung aller Feldgeräte, welche in der auf der Transfereinheit gespeicherten Liste der zu aktualisierenden Feldgeräte angeführt sind, wird die Transfereinheit in einem siebenten Verfahrensschritt 107 zur zentralen Verwaltungseinheit rücktransferiert. Es wird wieder zwischen der Transfereinheit und der zentralen Verwaltungseinheit drahtgebundene oder drahtlose Datenverbindung aufgebaut. In einem achten Verfahrensschritt 108 werden dann die Verwaltungsdaten, welche je Feldgerät und für die auf dem jeweiligen Feldgerät eingesetzten Funktionseinheiten auf der zentralen Verwaltungseinheit hinterlegt sind, entsprechend angepasst. Dazu wird der auf der Transfereinheit gespeicherte aktuelle Status des jeweiligen Feldgeräts herangezogen. Damit wird weitgehend sichergestellt, dass die Informationen und Verwaltungsdaten zu einem Feldgerät auf der zentralen Verwaltungseinheit mit einem tatsächlichen Zustand auf dem entsprechenden Feldgerät im verteilten Automatisierungssystem übereinstimmen. Sind alle aktuellen Stati auf die zentrale Verwaltungseinheit übertragen bzw. die Verwaltungsdaten entsprechend angepasst, dann wird der Abschluss dieser Transaktion von der Transfereinheit wieder durch einen einfache Nachricht (z.B. mittels einer Status-LED) angezeigt. Die Datenverbindung zwischen Transfereinheit und zentraler Verwaltungseinheit kann beendet und die Transfereinheit abgeschaltet werden.

## Patentansprüche

1. Verfahren zum Installieren und Aktualisieren von Funktionsmodulen, welche auf Feldgeräten eines verteilten Automatisierungssystems, insbesondere eines Energieversorgungssystems, eingesetzt werden, wobei zu jedem Feldgerät auf einer zentralen Verwaltungseinheit die jeweils eingesetzten Funktionsmodule mit zugehörigen Verwaltungsdaten hinterlegt werden, und wobei keine nutzbare Datenverbindung zwischen der zentralen Verwaltungseinheit und den Feldgeräten des verteilten Automatisierungssystems besteht, ***dadurch gekennzeichnet, dass*** von der zentralen Verwaltungseinheit die zu aktualisierenden Feldgeräte festgelegt werden (101), dass nach Aufbau einer Datenverbindung zwischen der zentralen Verwaltungseinheit und einer Transfereinheit automatisch eine Liste der zu aktualisierenden Feldgeräte erstellt und die Liste gemeinsam mit den jeweils zu installierenden Funktionsmodulen und den zugehörigen Verwaltungsdaten auf die Transfereinheit übertragen wird (102), dass nach einem Transfer der Transfereinheit zum jeweiligen zu aktualisierenden Feldgerät eine Datenverbindung aufgebaut wird (103), dass nach erfolgreicher Authentifizierung (104) der Transfereinheit die jeweils zu installierenden Funktionsmodule auf das jeweilige zu aktualisierende Feldgerät übertragen und dort installiert werden (105), dass nach erfolgter Installation von der Transfereinheit ein aktueller Status des jeweiligen Feldgeräts abgefragt und gespeichert wird (106), und dass nach einem Rücktransfer der Transfereinheit zur zentralen Verwaltungseinheit eine Datenverbindung aufgebaut (107) und die Verwaltungsdaten automatisch anhand des auf der Transfereinheit gespeicherten aktuellen Status des jeweiligen Feldgeräts angepasst werden (108) .

2. Verfahren nach Anspruch 1, ***dadurch gekennzeichnet, dass*** zusätzlich zur Authentifizierung der Transfereinheit das jeweilige zu aktualisierende Feldgerät von der Transfereinheit mittels Nahfeldkommunikation identifiziert wird (104) .

3. Verfahren nach einem der Ansprüche 1 bis 2, ***dadurch gekennzeichnet, dass*** von der auf die Transfereinheit übertragenen Liste alle aktuell zu aktualisierenden Feldgeräte mit den jeweils zu installierenden Funktionsmodulen und den jeweils zugehörigen Verwaltungsdaten umfasst werden (102).

4. Verfahren nach einem der Ansprüche 1 bis 2, ***dadurch gekennzeichnet, dass*** von der auf die Transfereinheit übertragenen Liste eine ausgewählte Untermenge der aktuell zu aktualisierenden Feldgeräte mit den jeweils zu installierenden Funktionsmodulen und den jeweils zugehörigen Verwaltungsdaten umfasst werden (102).

5. Verfahren nach einem der vorangegangenen Ansprüche, ***dadurch gekennzeichnet, dass*** eine abgeschlossene Übertragung der Liste der zu aktualisierenden Feldgeräte sowie der jeweils zugehörigen Funktionsmodule und der jeweils zugehörigen Verwaltungsdaten und/oder eine abgeschlossene Anpassung der Verwaltungsdaten in der zentralen Verwaltungseinheit von der Transfereinheit durch einen Nachricht angezeigt wird (102, 108).

6. Verfahren nach einem der vorangegangenen Ansprüche, ***dadurch gekennzeichnet, dass*** eine abgeschlossene Installation der jeweiligen Funktionsmodule auf dem jeweiligen zu aktualisierenden Feldgerät und eine abgeschlossene Abfrage des aktuellen Status des jeweiligen Feldgeräts von der Transfereinheit durch einen Nachricht angezeigt werden (106) .

7. Verfahren nach einem der vorangegangenen Ansprüche, ***dadurch gekennzeichnet, dass*** die Datenverbindung zwischen zentraler Verwaltungseinheit und der Transfereinheit und/oder die Datenverbindung zwischen der Transfereinheit und dem jeweiligen zu aktualisierenden Feldgerät als drahtgebundene oder als drahtlose Verbindung aufgebaut wird (102, 103, 107).

8. Verfahren nach einem der vorangegangenen Ansprüche, ***dadurch gekennzeichnet, dass*** in den zum jeweiligen Funktionsmodul zugehörigen Verwaltungsdaten zumindest Lizenzdaten, Versionsdaten und/oder Zugangsdaten für das jeweilige Feldgerät, auf welchem das jeweilige Funktionsmodul eingesetzt wird, hinterlegt werden.

9. Verfahren nach einem der vorangegangenen Ansprüche, ***dadurch gekennzeichnet, dass*** für die Authentifizierung zwischen dem jeweiligen zu aktualisierenden Feldgerät und der Transfereinheit ein Passwort oder vorvereinbarte Schlüssel oder ein einmalig benutzbarer Schlüssel verwendet wird (104).
